# EUROPÄISCHE PATENTANMELDUNG

(11) **EP 2 287 042 A1**
(43) Veröffentlichungstag der Anmeldung: **23.02.2011**
(21) Anmeldenummer: 10171958.1
(22) Anmeldetag: 05.08.2010
(51) Int. Cl.: B60Q 3/00, B60Q 3/02

(54) **Beleuchtungsvorrichtung für einen Fahrzeuginnenraum**

(30) Priorität: 21.08.2009 DE 102009038483
(71) Anmelder: International Automotive Components Group GmbH, 47804 Krefeld (DE)
(72) Erfinder: Cannon, Carter Scott, 80799, München (DE)
(74) Vertreter: Liesegang, Eva

(57) **Zusammenfassung**

Eine indirekte Fahrzeuginnenraumbeleuchtung (10) erstreckt sich entlang einer Fahrzeugdachöffnung (18) und wird von einem extrudierten Profilelement (12), welches lösbar mit einem Einfassungselement (20) der Dachöffnung (18) verbunden oder einstückig mit diesem ausgebildet ist, zumindest um einen Abschnitt der Öffnung geführt. Als Leuchtkörper eignen sich sowohl Lichtleiterkabel als auch elektrolumineszente Lichtbänder oder mit lichtemittierenden Dioden versehene Bänder. Die Beleuchtungsvorrichtung (10) kann so ausgerichtet werden, dass das Licht von der Beleuchtungsvorrichtung im wesentlichen parallel zu einer Abdeckung (56) und/oder einer Scheibe (52) der Dachöffnung (18) ausgesandt wird und zumindest teilweise von der Abdeckung (56) bzw. Scheibe (52) in den Fahrzeuginnenraum gestreut oder reflektiert wird.

## Beschreibung

Die Erfindung bezieht sich auf eine Beleuchtungsvorrichtung für einen Fahrzeuginnenraum, insbesondere eine indirekte, entlang einer Dachöffnung ausgebildete Innenraumbeleuchtung für ein Kraftfahrzeug.

### Hintergrund der Erfindung und Stand der Technik

Zur Ausstattung moderner Kraftfahrzeuge gehören häufig eines oder sogar mehrere Schiebe-, Sonnen- oder Panoramadächer. Es aus dem Stand der Technik bekannt, dass sich solche Dachöffnungen konstruktiv und gestalterisch auch für die Innenraumbeleuchtung des Fahrzeugs nutzbar machen lassen, um eine dezente, den Fahrer nicht blendende Beleuchtung zu schaffen.

Beispielsweise beschreibt die EP 1 903 359 A2 ein Panoramadach mit einer Glasscheibe, entlang deren Randes ein Lichtleiter oder eine Mehrzahl diskreter Lichtquellen angeordnet sind. Das ausgesandte Licht tritt seitlich in die Glasscheibe ein und wird nach Reflektion an einer oberen Deckscheibe in den Fahrzeuginnenraum gestreut. Eine ähnliche Anordnung mit einer stabförmigen Lichtquelle, deren Licht seitlich in die Glasscheibe eines Schiebedachs eintritt und über eine Vielzahl von in der Scheibe ausgebildeten Reflektionsflächen nach unten in den Fahrgastraum hinein reflektiert wird, ist in der DE 102 04 359 B4 beschrieben.

Die EP 1 277 616 A1 offenbart ein Schiebedach für ein Kraftfahrzeug, dessen Glasdeckel seitlich von einer umlaufenden Hinterschäumung begrenzt wird, in die ein Lichtkanal in Form eines ringförmigen Plexiglaskörpers eingebettet ist. Von der Lichtquelle in Richtung auf die Scheibe emittiertes Licht wird an der Innenfläche der Glasscheibe reflektiert bzw. gestreut und in den Fahrgastraum gelenkt. Zur Verbesserung der Streuung ist die Glasplatte innenseitig beschichtet oder aufgeraut.

Die vorstehend beschriebenen Beleuchtungsvorrichtungen ermöglichen einen flächigen, weitgehend blendfreien Lichtaustritt in den Fahrgastraum, welcher eine dezente und angenehme Innenraumbeleuchtung schafft. Die genannten Lösungen haben jedoch den Nachteil, dass die Beleuchtungsvorrichtung ein integraler Bestandteil des (ggf. aufstellbaren und/oder verschiebbaren) Deckels der Dachöffnung ist. Die Notwendigkeit, die Beleuchtungsvorrichtung gemeinsam mit dem Deckel der Dachöffnung zu bewegen, führt zu erhöhten konstruktiven Anforderungen. Insbesondere muss die Beleuchtungsvorrichtung derart in den Deckel der Dachöffnung integriert werden, dass ein störungsfreies Öffnen und Schließen des Deckels gewährleistet ist und eine übermäßige Vergrößerung der Abmessungen oder des Gewichtes des Deckels vermieden wird. Die Herstellung von Dachöffnungen mit integrierter Beleuchtung ist daher bislang recht aufwendig. Zudem ist ein nachträglicher Einbau oder ein Ersetzen oder Instandsetzen der Innenraumbeleuchtung ohne ein vollständiges Ersetzen des Deckels der Dachöffnung bei den aus dem Stand der Technik vorbekannten Lösungen kaum möglich.

Aus der JP 2001-171429 A ist eine ortsfeste Innenraumbeleuchtung bekannt, bei der ein langgestrecktes Lichtelement in eine seitliche Abdeckung des Dachhimmels aufgenommen ist und von unten vertikal gegen die darüberliegende Scheibe oder Sonnenblende der Dachöffnung strahlt. Das an der Scheibe oder Abdeckung reflektierte Licht fällt teilweise in den Fahrzeuginnenraum zurück und leuchtet ihn aus. Die in der JP 2001-171429 A vorgeschlagene Lösung vermeidet einige der Nachteile einer in den Deckel integrierten Innenraumbeleuchtung. Doch ermöglicht sie keine einfache und zeitsparende Montage oder Ersetzung der Beleuchtungsvorrichtung. Zudem ist der Dachhimmel (und mit ihm die Beleuchtungsvorrichtung) während der Bewegung des Fahrzeugs oft störenden Vibrationen ausgesetzt.

Der Einsatz extrudierter Profile für die Innenbeleuchtung eines Busses ist beispielsweise in der US 2002/0003706 A1 in weiteren Einzelheiten beschrieben.

### Überblick über die Erfindung

Es ist daher eine Aufgabe der Erfindung, eine Innenraumbeleuchtung entlang einer Fahrzeugdachöffnung bereitzustellen, welche eine vereinfachte, kostengünstige Montage, einen festen, vibrationsfreien Halt sowie einen schnellen Austausch der Beleuchtungsvorrichtung gestattet.

Diese Aufgabe wird durch die erfindungsgemäße Beleuchtungsvorrichtung mit den Merkmalen von Anspruch 1 oder mit den Merkmalen von Anspruch 7 gelöst. Die Erfindung umfasst auch ein Einfassungselement für eine Öffnung zwischen Fahrzeuginnenraum und Fahrzeugaußenraum mit einer solchen Beleuchtungsvorrichtung sowie eine Fahrzeugdachöffnung mit einem erfindungsgemäßen Einfassungselement bzw. einer erfindungsgemäßen Beleuchtungsvorrichtung. Die abhängigen Ansprüche beziehen sich auf vorteilhafte Ausgestaltungen.

Die Erfindung gibt eine Beleuchtungsvorrichtung für einen Fahrzeuginnenraum an, welcher eine von einem Einfassungselement umschlossene Öffnung aufweist, mit einer langgestreckten Führungseinrichtung, welche lösbar mit dem Einfassungselement verbunden oder verbindbar ist und sich entlang wenigstens eines Abschnittes des Randes der Öffnung erstreckt, sowie mit einer Beleuchtungseinrichtung, welche mittels der Führungseinrichtung mit dem Einfassungselement verbunden oder verbindbar ist und sich entlang des Randes der Öffnung erstreckt.

Die Erfindung kann zur Befestigung und Führung der Beleuchtungseinrichtung um den Rand der Öffnung ein bestehendes Einfassungselement der Öffnung verwenden. Dies ermöglicht eine besonders kompakte, platzsparende Ausgestaltung, welche die Nachteile beweglicher, mit dem Deckel der Dachöffnung verbundener Beleuchtungsvorrichtungen vermeidet und insbesondere die Abmessungen oder das Gewicht des Deckels der Dachöffnung nicht erhöht. Zudem ist eine nachträgliche Montage der erfindungsgemäßen Beleuchtungsvorrichtung mit geringem konstruktiven Aufwand möglich.

Da die Führungseinrichtung lösbar mit dem Einfassungselement verbunden ist, lässt sich die Beleuchtungsvorrichtung in einfacher Weise warten, instandsetzen oder ersetzen, ohne dass aufwändige konstruktive Eingriffe in den Mechanismus und den Aufbau der Dachöffnung nötig werden.

Die langgestreckte Führungseinrichtung ermöglicht es, die Beleuchtungseinrichtung entlang wenigstens eines Abschnitts des Randes der Öffnung zu führen und dadurch eine indirekte, dezente, den Fahrer nicht blendende Innenraumbeleuchtung zu schaffen, welche die konstruktiven Gegebenheiten einer Dachöffnung und ihres Einfassungselements in vorteilhafter Weise ausnutzt. Zudem lässt sich ein unerwünschter Lichtaustritt in den Fahrzeuginnenraum vermeiden.

Die Führungseinrichtung stellt einen konstanten Abstand zwischen der Beleuchtungseinrichtung und der Scheibe bzw. Abdeckung der Öffnung sicher, so dass sich ein gleichmäßiger Beleuchtungseffekt ergibt.

Bei der Öffnung kann es sich insbesondere um eine durch ein Glasdach und/oder eine Sonnenschutzabdeckung verschlossene oder verschließbare Dachöffnung handeln. Die Erfindung eignet sich in gleicher Weise sowohl für Schiebe- und Aufstelldächer als auch für Panoramadächer. Das Einfassungselement, welches die Öffnung umschließt, kann sowohl einteilig als auch mehrteilig ausgebildet sein. Insbesondere kann es sich um einen Verstärkungsrahmen handeln, wie er im Fahrzeugbau üblicherweise zur Umfassung von Schiebedächern und/oder Panoramadächern Verwendung findet.

Die Verbindung mit dem Einfassungselement der Öffnung stellt eine sehr stabile Führung der Beleuchtungseinrichtung sicher und verhindert störende Vibrationen der Beleuchtungseinrichtung während der Bewegung des Fahrzeugs. Zu diesem Zweck ist die Führungsvorrichtung vorzugsweise aus einem elastischen Material hergestellt.

In einer bevorzugten Ausführungsform umfasst die Beleuchtungseinrichtung einen bandförmigen Leuchtkörper, der sich entlang der Öffnung erstreckt. Ein bandförmiger Leuchtkörper lässt sich an die Kontur der Öffnung besonders gut anpassen und kann ihrer Krümmung folgen.

In einer weiteren bevorzugten Ausführungsform umfasst die Beleuchtungseinrichtung einen Lichtleiter und/oder ein elektrolumineszentes Lichtband und/oder ein mit lichtemittierenden Dioden versehenes Band. Damit lassen sich ein gleichmäßiger, blendfreier Beleuchtungseffekt und ein angenehmes Raumgefühl schaffen.

Vorzugsweise ist die Führungseinrichtung auf das Einfassungselement aufsteckbar oder aufschiebbar. Diese Ausführungsform erlaubt ein schnelles und einfaches Montieren bzw. Austauschen der erfindungsgemäßen Beleuchtungsvorrichtung und ermöglicht gleichzeitig einen festen, vibrationsunempfindlichen Halt der Beleuchtungseinrichtung in ihrer vorbestimmten Position.

Die erfindungsgemäße Beleuchtungsvorrichtung ist vorzugsweise formschlüssig mit der Führungseinrichtung verbunden. Eine solche Beleuchtungsvorrichtung ist besonders kompakt und kann in vorteilhafter Weise an den beschränkten Bauraum entlang der Öffnung angepasst werden.

In einer weiteren bevorzugten Ausführungsform ist die Beleuchtungseinrichtung lösbar mit der Führungseinrichtung verbunden. Insbesondere kann die Beleuchtungseinrichtung über eine mechanische Klemmvorrichtung oder eine lösbare Haft- oder Klebeverbindung mit der Führungseinrichtung verbunden sein. Eine lösbare Verbindung ermöglicht einen schnellen und bequemen Austausch der Beleuchtungseinrichtung.

Gemäß einer bevorzugten Ausführungsform ist die Führungseinrichtung zumindest teilweise und/oder abschnittsweise transparent und umschließt die Beleuchtungseinrichtung zumindest teilweise. Eine abschnittsweise transparente Führungseinrichtung ermöglicht das gezielte Einstellen des Lichtflusses in den Fahrzeuginnenraum.

Vorzugsweise weist die Führungseinrichtung eine langgestreckte Aussparung mit elastischen Randabschnitten auf, welche die Beleuchtungseinrichtung zumindest teilweise umgreifen. Insbesondere kann die Beleuchtungseinrichtung vollständig oder teilweise in die Führungseinrichtung eingebettet sein.

Gemäß einer bevorzugten Ausführungsform ist die Führungseinrichtung und/oder die Beleuchtungseinrichtung biegbar. Dadurch lässt sich die Beleuchtungsvorrichtung an die Kontur der Öffnung besonders gut anpassen und kann ihrer Krümmung folgen.

In einer bevorzugten Ausführungsform führt die Führungseinrichtung die Beleuchtungseinrichtung um zumindest einen Eckabschnitt der Öffnung.

In einer Weiterbildung umfasst die Führungseinrichtung ein extrudiertes Profil. In einem extrudierten Profil lassen sich Verbindungselemente sowohl zum Halten der Beleuchtungseinrichtung als auch zur Verbindung mit dem Einfassungselement vorteilhaft ausbilden. Extrudierte Profile ermöglichen hinsichtlich der Formgestaltung und Materialauswahl eine besonders große Flexibilität und sind überdies kostengünstig in der Herstellung.

Vorzugsweise weist das extrudierte Profil ein integrales Verbindungselement zur Verbindung mit dem Einfassungselement auf. Die integrale Ausbildung der Verbindungselemente ist nicht auf Führungsvorrichtungen beschränkt, die als extrudiertes Profil ausgebildet sind. Bei solchen lassen sie sich jedoch besonders einfach verwirklichen.

In einer Weiterbildung der Erfindung umfasst die Führungseinrichtung auch einen Kanal für elektrische Leitungen. Alternativ oder zusätzlich kann die Führungseinrichtung an ihrer Außenseite Kabelhalterungen für elektrische Leitungen umfassen.

Der Kanal bzw. die Kabelhalterungen können einerseits zur Führung der elektrischen Leitungen für die erfindungsgemäße Beleuchtungseinrichtung selbst dienen. Alternativ oder zusätzlich können sie auch vorteilhaft zur Führung von Versorgungsleitungen weiterer elektrischer Komponenten des Fahrzeugs verwendet werden. Die Führungseinrichtung kann eine Vielzahl solcher Versorgungsleitungen um den Rand der Öffnung führen und separate Kabelkanäle zumindest teilweise ersetzen.

Gemäß einer bevorzugten Ausführungsform erstreckt sich der Bereich, über den die Beleuchtungseinrichtung Licht an den Innenraum abgibt, über wenigstens ein Zehntel, vorzugsweise über wenigstens ein Viertel, der Umfangslänge der Öffnung. Indem die Lichtabgabe in den Innenraum über einen ausgedehnten Randbereich der Öffnung verteilt wird, lässt sich eine blendfreie, dezente Innenraumbeleuchtung erreichen. Die Innenraumbeleuchtung kann so schwach eingestellt werden, dass sie auch während der Fahrt eingeschaltet bleiben kann, ohne dass einzelne Lichtquellen blenden oder sich in den Scheiben spiegeln.

In einer besonders bevorzugten Ausführungsform umschließen die Führungseinrichtung und/oder die Beleuchtungseinrichtung die Öffnung vollständig. Dadurch lässt sich eine besonders gleichmäßige Ausleuchtung des Innenraums erreichen.

In einer Weiterbildung der Erfindung umfasst die Führungseinrichtung mindestens zwei Führungssegmente, welche gemeinsam die Öffnung umschließen.

Ebenso kann die Beleuchtungseinrichtung mindestens zwei Beleuchtungssegmente umfassen, welche gemeinsam die Öffnung umschließen.

In einer Weiterbildung der Erfindung ist zwischen zwei benachbarten Führungssegmenten und/oder zwei benachbarten Beleuchtungselementen ein Spalt oder Kabelkanal vorgesehen. Über ihn lassen sich der Führungseinrichtung oder der Beleuchtungseinrichtung elektrische Versorgungsleitungen zuführen.

In einer bevorzugten Ausführungsform sind die Führungseinrichtung und die Beleuchtungseinrichtung jeweils einstückig ausgebildet. Eine solche Beleuchtungsvorrichtung lässt sich besonders einfach und schnell montieren bzw. austauschen.

In einer Weiterbildung der Erfindung ist die Beleuchtungseinrichtung so ausgerichtet, dass das von der Beleuchtungseinrichtung ausgesandte Licht zumindest teilweise von einer Abdeckung und/oder einer Scheibe der Öffnung in den Fahrzeuginnenraum reflektiert wird. Dadurch lässt sich eine dezente, als angenehm empfundene indirekte Beleuchtung des Fahrgastraums erreichen.

Gemäß einer Weiterbildung der Erfindung ist die Beleuchtungseinrichtung so ausgerichtet, dass das Licht von der Beleuchtungsvorrichtung im wesentlichen parallel zu einer Abdeckung und/oder einer Scheibe der Öffnung ausgesandt wird. Das im wesentlichen parallel ausgesandte Licht streift an der Abdeckung und/oder der Scheibe entlang und wird in den Innenraum gestreut, so dass sich ein flächiger, weitgehend blendfreier Lichtaustritt erzielen lässt.

Die Erfindung umfasst auch ein Einfassungselement für eine Öffnung zwischen Fahrzeuginnenraum und Fahrzeugaußenraum mit einer Beleuchtungsvorrichtung nach einer der vorstehend beschriebenen Ausführungsformen.

In einer Weiterbildung umfasst das Einfassungselement einen Profilkragen, welcher sich entlang der Öffnung erstreckt, sowie Befestigungselemente zum Verbinden des Einfassungselementes mit der Führungseinrichtung, wobei sich die Befestigungselemente entlang der von der Öffnung abgewandten Seite des Profilkragens erstrecken. Der Profilkragen kann in dieser Ausgestaltung als Lichtblende dienen und die Beleuchtungsvorrichtung vor den Blicken der Fahrzeuginsassen verbergen, wenn dies gewünscht ist.

In einer bevorzugten Ausführungsform ist die Beleuchtungseinrichtung unterhalb der durch den Rand der Öffnung definierten Ebene angeordnet. Auf diese Weise lässt sich die Beleuchtungsvorrichtung einbauen, warten oder austauschen, ohne dass ein gleichzeitiger Ausbau des die Öffnung verschließenden Deckels, der Scheibe oder auch nur einer Sonnenschutzabdeckung nötig wird. Dies ermöglicht eine schnelle und einfache Nachrüstung von Fahrzeugen mit einer erfindungsgemäßen Beleuchtungsvorrichtung beim Fahrzeughändler oder sogar erst beim Endkunden.

Die Erfindung umfasst auch eine Fahrzeugdachöffnung mit einem Einfassungselement nach einer der vorstehend beschriebenen Ausführungsformen und/oder mit einer Beleuchtungsvorrichtung nach einer der vorstehend beschriebenen Ausführungsformen.

In einem weiteren Aspekt ist die Erfindung gerichtet auf eine Beleuchtungsvorrichtung für einen Fahrzeuginnenraum mit einem Einfassungselement, welches eine Öffnung des Fahrzeuginnenraums umschließt, mindestens einem Halteelement, welches einstückig mit dem Einfassungselement ausgebildet ist, und mit einer Beleuchtungseinrichtung, welche mittels des mindestens einen Halteelements mit dem Einfassungselement verbunden ist und sich entlang wenigstens eines Abschnitts des Randes der Öffnung erstreckt.

Dieser Ausgestaltung der Erfindung liegt die Erkenntnis zugrunde, dass sich die Beleuchtungseinrichtung auch unter Verwendung von einstückig mit dem Einfassungselement ausgebildeten Halteelementen entlang des Randes der Öffnung führen lässt, um eine indirekte, den Fahrer nicht blendende Innenraumbeleuchtung zu schaffen, welche die konstruktiven Gegebenheiten einer Dachöffnung und ihres Einfassungselements in vorteilhafter Weise ausnutzt. Auch ein einstückig mit dem Einfassungselement ausgebildetes Halteelement garantiert einen festen Halt der Beleuchtungseinrichtung in ihrer vorbestimmten Position, welche auch bei Bewegung des Fahrzeugs gegen störende Vibrationen geschützt ist.

Ein einstückig mit dem Einfassungselement ausgebildetes Halteelement kann darüber hinaus besonders kompakt ausgebildet sein und ist daher immer dann besonders geeignet, wenn der im Fahrzeug zur Verfügung stehende Bauraum beschränkt ist. Zudem vermindert die einstückige Ausgestaltung den Fertigungsaufwand, so dass die Herstellungskosten geringer sind.

Das einstückig mit dem Einfassungselement ausgebildete Halteelement übernimmt zumindest teilweise die Funktion der Führungseinrichtung der vorstehend beschriebenen Ausführungsformen und kann ihr in den Merkmalen, welche sich auf die Führung der Beleuchtungseinrichtung entlang der Öffnung beziehen, ähneln oder gleichen. Zu den Vorteilen der nachfolgend beschriebenen Weiterbildungen kann deshalb auf die vorstehend beschriebenen Ausführungsformen verwiesen werden.

In einer erfindungsgemäßen Weiterbildung umfasst die Beleuchtungseinrichtung einen bandförmigen Leuchtkörper, der sich entlang der Öffnung erstreckt.

Gemäß einer bevorzugten Ausführungsform umfasst die Beleuchtungseinrichtung einen Lichtleiter und/oder ein elektrolumineszentes Lichtband und/oder ein mit lichtemittierenden Dioden versehenes Band.

Das mindestens eine Haltelement umfasst nach einer weiteren Ausführungsform eine langgestreckte Aussparung mit elastischen Randabschnitten, welche die Beleuchtungseinrichtung zumindest teilweise umgreifen.

Das mindestens eine Halteelement kann auch zumindest teilweise und/oder abschnittsweise transparent sein und die Beleuchtungseinrichtung zumindest teilweise umschließen.

In einer Weiterbildung der Erfindung ist die Beleuchtungseinrichtung zumindest teilweise in das mindestens eine Halteelement eingebettet.

Gemäß einer bevorzugten Ausführungsform sind das Einfassungselement und/oder die Beleuchtungseinrichtung biegbar.

Das Einfassungselement kann die Beleuchtungseinrichtung um zumindest einen Eckabschnitt der Öffnung führen.

Gemäß einer bevorzugten Ausführungsform sind das Einfassungselement und das mindestens eine Halteelement aus Kunststoff ausgebildet. Kunststoff ist aufgrund der großen Gestaltungsfreiheit bei der Formgebung bei gleichzeitiger Stabilität und geringen Herstellungskosten als Material für eine einstückige Ausgestaltung des Halteelements mit dem Einfassungselement besonders geeignet.

In einer bevorzugten Ausführungsform umfasst das Einfassungselement und/oder Halteelement ein extrudiertes Profil.

In einer weiteren bevorzugten Ausführungsform umfasst das Einfassungselement einen Kanal für elektrische Leitungen.

Ebenso kann das mindestens eine Halteelement an seiner Außenseite Kabelhalterungen für elektrische Leitungen umfassen.

Vorzugsweise erstreckt sich die Beleuchtungseinrichtung entlang wenigstens eines Zehntels, besonders vorzugsweise eines Viertels, der Umfangslänge der Öffnung. Insbesondere kann die Beleuchtungseinrichtung die Öffnung vollständig umschließen.

In einer bevorzugten Ausführungsform umfasst das Einfassungselement mindestens zwei Einfassungssegmente, welche gemeinsam die Öffnung umschließen.

Ebenso kann die Beleuchtungseinrichtung mindestens zwei Beleuchtungssegmente umfassen, welche gemeinsam die Öffnung umschließen.

In einer alternativen Ausführungsform sind das Einfassungselement und die Beleuchtungseinrichtung jeweils einstückig ausgebildet.

Vorzugsweise ist die Beleuchtungseinrichtung so ausgerichtet, dass das von der Beleuchtungseinrichtung ausgesandte Licht zumindest teilweise von einer Abdeckung und/oder einer Scheibe der Öffnung in den Fahrzeuginnenraum reflektiert wird.

In einer Weiterbildung der Erfindung ist die Beleuchtungseinrichtung so ausgerichtet, dass das Licht von der Beleuchtungseinrichtung im Wesentlichen parallel zu einer Abdeckung und/oder einer Scheibe der Öffnung ausgesandt wird.

Das Einfassungselement einer erfindungsgemäßen Beleuchtungsvorrichtung umfasst vorzugsweise einen Profilkragen, welcher sich entlang der Öffnung erstreckt, wobei das zumindest eine Halteelement auf der von der Öffnung abgewandten Seiten des Profilkragens angeordnet ist. Der Profilkragen kann insbesondere einstückig mit dem Einfassungselement ausgebildet sein.

Vorzugsweise ist die Beleuchtungseinrichtung unterhalb der durch den Rand der Öffnung definierten Ebene angeordnet.

In einer Weiterbildung der Erfindung weist das Einfassungselement mindestens ein Verbindungselement zur Verbindung mit einem Fahrzeugdachelement auf. Das Verbindungselement kann die Stabilität und Vibrationsresistenz des Einfassungselementes erhöhen und unterstützt daher den festen, vibrationsfreien Halt der mit dem Einfassungselement über die Halteelemente verbundenen Beleuchtungseinrichtung.

Auch das mindestens eine Verbindungselement kann einstückig mit dem Einfassungselement ausgebildet sein. Dadurch ergeben sich die vorstehend mit Bezug auf die einstückige Ausbildung des Halteelementes beschriebenen Vorteile.

In einer Weiterbildung der Erfindung umfasst die Beleuchtungsvorrichtung ein langgestrecktes Halteelement, welches die Öffnung vollständig umschließt.

In einer alternativen Ausführungsform umfasst die Beleuchtungsvorrichtung eine Mehrzahl von Halteelementen, welche in regelmäßigen Abständen entlang des Randes der Öffnung angeordnet sind. Auch räumlich voneinander getrennte Halteelemente genügen, um eine langgestreckte Beleuchtungseinrichtung entlang des Randes der Dachöffnung zu fixieren und zufriedenstellend gegen Vibrationen zu sichern.

### Detaillierte Beschreibung bevorzugter Ausführungsformen

Die zahlreichen Vorteile der erfindungsgemäßen Beleuchtungsvorrichtung lassen sich am besten anhand einer detaillierten Beschreibung der beigefügten Zeichnungen verstehen, in denen:
- Fig. 1: eine erfindungsgemäße Beleuchtungsvorrichtung zur Verbindung mit dem Einfassungselement einer Dachöffnung zeigt;
- Fig. 2a und 2b: geschnittene perspektivische Teilansichten einer Beleuchtungsvorrichtung gemäß einer ersten Ausführungsform der Erfindung zeigen, bei der die Beleuchtungseinrichtung in die Führungseinrichtung eingebettet ist;
- Fig. 3a und 3b: geschnittene perspektivische Teilansichten einer Beleuchtungsvorrichtung gemäß einer zweiten Ausführungsform der Erfindung zeigen, bei der die Beleuchtungseinrichtung lösbar mit der Führungseinrichtung verbunden ist;
- Fig. 4: geschnittene perspektivische Teilansichten einer Beleuchtungsvorrichtung gemäß einer dritten Ausführungsform der Erfindung zeigt;
- Fig. 5: im Querschnitt eine erfindungsgemäße Beleuchtungsvorrichtung und ihre Anordnung entlang einer Fahrzeugdachöffnung mit Schiebedach und Sonnenschutzabdeckung zeigt;
- Fig. 6a, 6b und 6c: alternative Ausgestaltungen der Verbindung zwischen der Führungsein- richtung erfindungsgemäßer Beleuchtungsvorrichtungen und dem Einfas- sungselement einer Dachöffnung zeigen;
- Fig. 7a und 7b: perspektivische Darstellungen einer Beleuchtungsvorrichtung gemäß ei- ner vierten Ausführungsform der Erfindung zeigen;
- Fig. 8a und 8b: geschnittene perspektivische Teilansichten von Varianten der vierten Ausführungsform der Erfindung zeigen;
- Fig. 9: einen Teilabschnitt einer Führungseinrichtung gemäß einer fünften Aus- führungsform der Erfindung zeigt;
- Fig. 10a, 10b, 10c: geschnittene perspektivische Teilansichten gemäß einer sechsten Ausfüh- rungsform der Erfindung zeigen, bei der die Halteelemente zur Führung der Leuchtkörper einstückig mit dem Einfassungselement ausgebildet sind;
- Fig. 11: eine Schnittdarstellung einer Beleuchtungsvorrichtung mit einstückig ausgebildetem Halteelement zeigt;
- Fig. 12: eine erste Variante der in Fig. 11 gezeigten Ausführungsform zeigt;
- Fig. 13: eine zweite Variante der in Fig. 11 gezeigten Ausführungsform zeigt;
- Fig. 14: eine Querschnittsdarstellung einer Beleuchtungsvorrichtung gemäß einer siebten Ausführungsform der Erfindung zeigt;
- Fig. 15: drei alternative Ausgestaltungen eines erfindungsgemäßen Einfassungs- elementes zeigt.

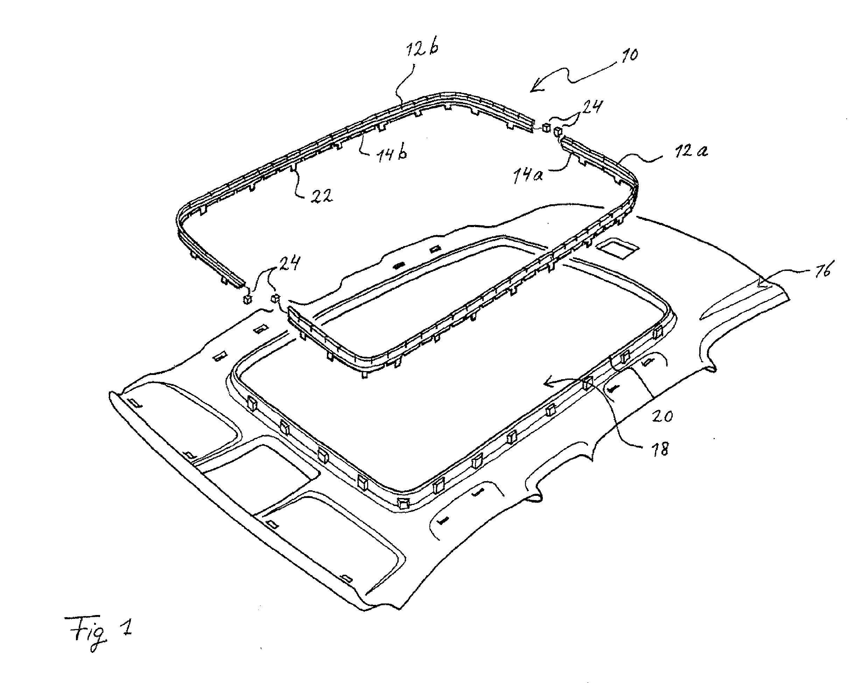

Fig. 1 zeigt eine erfindungsgemäße Beleuchtungsvorrichtung 10 für ein Glasdach oder Schiebedach eines Personenkraftwagens. Die Beleuchtungsvorrichtung 10 umfasst in der dargestellten Ausführungsform zwei extrudierte Profilhälften oder Profilsegmente 12a, 12b, von denen jede auf ihrer Innenseite einen zugehörigen bandförmigen Leuchtkörper 14a, 14b zur dezenten, indirekten Ausleuchtung des Fahrzeuginnenraumes trägt. Die Profilsegmente 12a, 12b bilden in der dargestellten Ausführungsform die Führungseinrichtung, die Leuchtkörper 14a, 14b die Beleuchtungseinrichtung der erfindungsgemäßen Beleuchtungsvorrichtung.

Fig. 1 zeigt zur Veranschaulichung ferner einen Teil der Dachinnenverkleidung 16, welche an ihrer Unterseite mit einem Dachhimmel bespannt ist und eine rechteckige Öffnung 18 aufweist, die ringsumlaufend von einem Verstärkungsrahmen 20 eingefasst ist. Der Verstärkungsrahmen 20, welcher üblicherweise aus Stahl oder Kunststoff ausgebildet ist, bildet in der gezeigten Ausführungsform das Einfassungselement. Er verleiht dem Rand der Öffnung 18 der Dachinnenverkleidung 16 Stabilität und Steifigkeit. Insbesondere verhindert der Verstärkungsrahmen 20 auch bei unebener Fahrbahn ein störendes Vibrieren der Dachinnenverkleidung im Bereich um die Dachöffnung.

Zusammen mit einer gleichgroßen Öffnung in der Dachaußenhaut des Fahrzeugs (nicht gezeigt), mit der sie in Deckung gebracht wird, bildet die Öffnung 18 der Dachinnenverkleidung 16 eine verschlossene oder verschließbare Fahrzeugdachöffnung, beispielsweise ein Schiebedach, ein Aufstelldach, ein kombiniertes Schiebe-Aufstelldach oder ein Glaspanoramadach. Die erfindungsgemäße Beleuchtungsvorrichtung eignet sich für alle üblichen Fahrzeugdachkonfigurationen, sowohl für bewegliche als auch für feststehende Dachfenster und für transparente Kunststoff- oder Glasdächer ebenso wie für Dächer mit zusätzlichen Sonnenschutzblenden zwischen dem Fahrgastraum und der Scheibe des Dachfensters. Das Dachfenster selbst sowie sein Verstell- und Verriegelungsmechanismus ist nicht Teil der Erfindung und in Fig. 1 nicht gezeigt.

Das extrudierte Profil 12a, 12b ist in Form und Größe an die Dachöffnung 18 angepasst und weist Befestigungselemente 22 zur lösbaren Verbindung mit dem Verstärkungsrahmen 20 auf. Nach der Verbindung mit dem Verstärkungsrahmen 20 umschließen die beiden Profilsegmente 12a, 12b gemeinsam den Rand der Dachöffnung 18 und führen die mit ihnen verbundenen Leuchtkörper 14a, 14b eng an der Innenseite der Öffnung entlang, so dass ein konstanter und vorbestimmter Abstand zwischen der Lichtquelle und einer die Dachöffnung abdeckenden Glasscheibe oder Sonnenblende eingehalten ist. Aufgrund der gegenüber dem Rand der Dachöffnung leicht zurückversetzten Montage der Profilsegmente 12a, 12b sind die Leuchtkörper 14a, 14b von den Sitzpositionen des Fahrgastraumes aus nicht unmittelbar einsehbar. Das von den Leuchtkörpern 14a, 14b emittierte Licht tritt entlang des Randes der Öffnung 18 unterhalb der Glasscheibe bzw. Sonnenblende des Dachfensters flächig aus und wird an der Glasscheibe bzw. Sonnenblende in den Innenraum gestreut oder reflektiert. Die Innenraumbeleuchtung kann gegebenenfalls so schwach eingestellt werden, dass sie auch während der Fahrt eingeschaltet bleiben kann und für ein angenehmes Raumgefühl sorgt. Das Licht ist dezent, blendfrei und spiegelt sich nicht in den Scheiben.

In der in Fig. 1 gezeigten Ausführungsform sind die Leuchtkörper 14a, 14b flache elektrolumineszente Lichtbänder, welche über Druckhaftelemente mit dem extrudierten Profil 12a, 12b verbunden sind. Die Druckhaftelemente erlauben es, durch Drücken der Lichtbänder gegen die Profilsegmente 12a, 12b eine Verbindung herzustellen, die eine ausreichende Festigkeit aufweist, aber dennoch schnell und einfach gelöst werden kann, wenn das Lichtband ausgetauscht werden soll, Beispiele für Druckhaftelemente sind druckempfindliche Kitte oder Klebebänder. Alternativ können beispielsweise auch Lichtleiterkabel oder mit lichtemittierenden Dioden besetzte Bänder eingesetzt werden, wie sie nachfolgend in weiteren Einzelheiten beschrieben werden.

In der gezeigten Ausführungsform ist sowohl die Führungseinrichtung als auch die Beleuchtungseinrichtung zweiteilig ausgebildet, wobei die Profilhälften 12a, 12b und die zugehörigen Leuchtkörper 14a, 14b gemeinsam die Öffnung 18 vollständig umschließen. Dort, wo die erste Profilhälfte 12a und die zweite Profilhälfte 12b bzw. der erste Leuchtkörper 14a und der zweite Leuchtkörper 14b aneinandergrenzen, sind Kabelführungen 24 zur Versorgung der Leuchtkörper 14a, 14b ausgebildet. Anstelle der in Fig. 1 gezeigten Ausführungsform mit jeweils zwei Profilhälften 12a, 12b und zwei Leuchtkörpern 14a, 14b können die Führungseinrichtung und die Beleuchtungseinrichtung je nach den Anforderungen und dem zur Verfügung stehenden Bauraum auch einteilig oder mehrteilig ausgebildet sein. Beispielsweise kann das extrudierte Profil vierteilig ausgebildet sein, wobei jeweils ein Führungssegment einer der Seitenkanten der rechteckigen Dachöffnung 18 entspricht. In dieser Ausführungsform muss das Profil nicht um die Eckbereiche der Dachöffnung geführt werden, so dass der Einbau schneller und einfacher erfolgen kann. Eine Mehrzahl von Führungssegmenten ist auch dann vorteilhaft, wenn ein Fahrzeug nachträglich mit einer erfindungsgemäßen Beleuchtungsvorrichtung ausgerüstet werden soll und der verfügbare Bauraum sehr knapp ist.

Als Material für das extrudierte Profil eignen sich beispielsweise Acrylnitril-Butadien-Styrol (ABS), Polycarbonate (PC), Polyamid 6 (PA6) oder ein anderes temperatur- und UVbeständiges Polymermaterial. Aufgrund ihrer großen Material- und Formenvielfalt und der günstigen Herstellbarkeit sind extrudierte Profile als Führungseinrichtungen für die erfindungsgemäße Beleuchtungsvorrichtung besonders gut geeignet.

In der in Fig. 1 gezeigten Ausführungsform umgibt die Führungseinrichtung bzw. die Beleuchtungseinrichtung die Öffnung 18 vollständig. Eine dezente, blendfreie Innenbeleuchtung lässt sich allerdings auch schon dann erreichen, wenn sich die Beleuchtungseinrichtung nur entlang eines Teiles des Randes der Öffnung erstreckt, beispielsweise nur entlang zweier gegenüberliegender Längskanten der Dachöffnung 18.

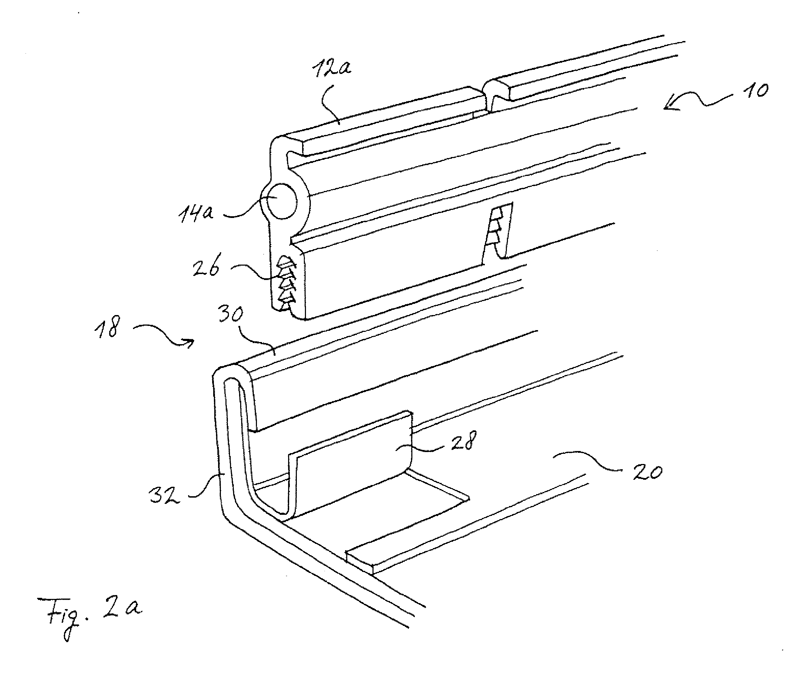

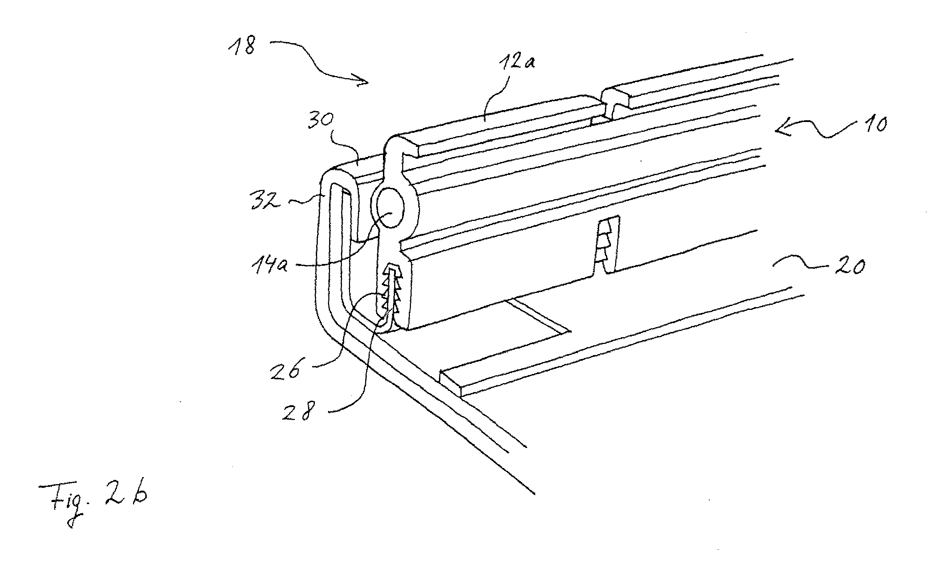

Eine Ausführungsform einer erfindungsgemäße Führungseinrichtung und Beleuchtungseinrichtung ist in der Schnittdarstellung der Fig. 2a und 2b in weiteren Einzelheiten dargestellt. Fig. 2a zeigt das extrudierte Profil 12a mit dem Leuchtkörper 14a vor der Verbindung mit dem Verstärkungsrahmen 20; Fig. 2b zeigt Beleuchtungsvorrichtung 10 und Verstärkungsrahmen 20 nach der Verbindung.

In der in Fig. 2a und 2b gezeigten Ausführungsform ist das extrudierte Profilsegment 12a, 12b stellenweise transparent ausgebildet und umschließt ein Lichtleiterkabel mit zylindrischem Querschnitt. Beispielhafte Lichtleiterkabel haben einen Durchmesser von ungefähr 3 bis 5 mm. Indem vorbestimmte Abschnitte entlang des Profilsegments 12a bzw. 12b transparent und andere lichtundurchlässig ausgebildet werden, lässt sich der Lichtausfall auf vorbestimmte Bereiche begrenzen und/oder seine Intensität an unterschiedlichen Abschnitten entlang des Randes der Öffnung 18 unterschiedlich einstellen. Durch geeignetes Einfärben des extrudierten Profils 12a, 12b können auch farbige Lichteffekte erzeugt werden.

Wie aus der Darstellung der Fig. 2a zu erkennen ist, umfasst das extrudierte Profil 12a, 12b auch integral ausgebildete Verbindungselemente in Form von mit Sperrhaken versehenen Vertiefungen, welche auf korrespondierende Flanschstücke 28 entlang des Verstärkungsrahmens 20 aufgeschoben werden können. Auf diese Weise lässt sich die Beleuchtungsvorrichtung 10 schnell, einfach und stabil mit dem Verstärkungsrahmen 20 verbinden. Eine solche Verbindung lässt sich auch schnell wieder lösen, falls zu einem späteren Zeitpunkt eine Wartung oder ein Austausch der Beleuchtungsvorrichtung erfolgen sollen. Eventuell kann zusätzlich eine Verklebung der Führungseinrichtung, in dieser Ausführung dem Profil, mit dem Einfassungselement, hier der Rahmen, erfolgen. Die Verbindung mit dem Verstärkungsrahmen 20 verleiht der Beleuchtungsvorrichtung 10 Stabilität und verhindert ein störendes Vibrieren des Leuchtkörpers 14a, 14b selbst bei unebenen Straßen. Zur Dämpfung von Vibrationen besteht die Führungseinrichtung bevorzugt aus einem elastischen Material.

Wie der Darstellung der Fig. 2b zu entnehmen ist, verläuft die Beleuchtungsvorrichtung 10 in der gezeigten Ausführungsform entlang der von der Öffnung 18 abgewandten Seite eines Profilkragens 30 des Verstärkungsrahmens 20, auf den der Dachhimmel 32 gespannt ist. Der Profilkragen 30 schirmt die Beleuchtungsvorrichtung 10 vom Fahrzeuginnenraum ab und lenkt das von dem Leuchtkörper 14a, 14b ausgesandte Licht gegen die Scheibe oder Abdeckung der Dachöffnung, von wo es in den Fahrgastraum reflektiert oder gestreut wird.

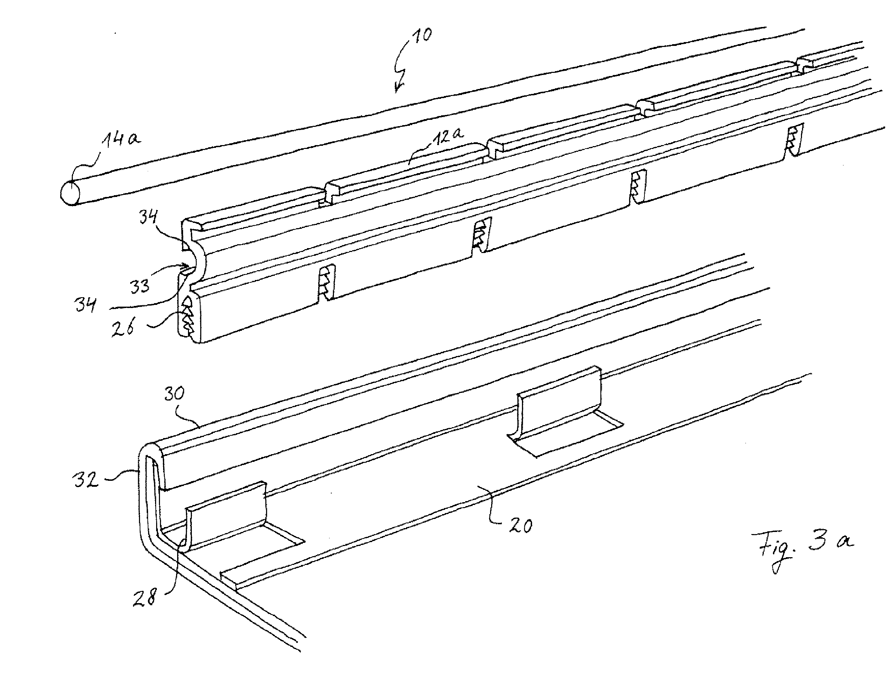

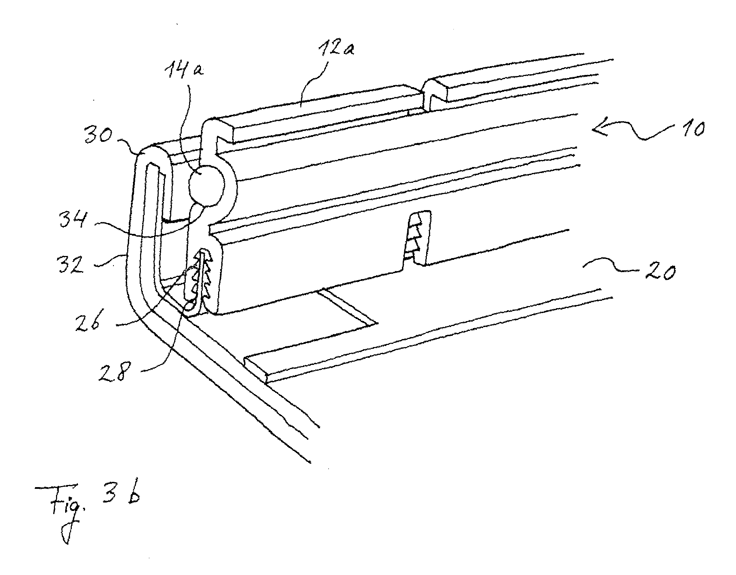

Eine alternative Ausführungsform der erfindungsgemäßen Beleuchtungsvorrichtung 10 ist in den Fig. 3a und 3b veranschaulicht. Die in Fig. 3a und 3b gezeigte Beleuchtungsvorrichtung 10 entspricht weitgehend der vorstehend mit Bezug auf die Fig. 2a und 2b beschriebenen Ausführungsform, und einander entsprechende Elemente tragen dieselben Bezugszeichen. Jedoch ist in dieser Ausführung das Lichtleiterkabel 14a nicht vollständig von dem extrudierten Profil 12a umschlossen oder in dieses eingebettet, sondern lösbar in dem extrudierten Profil 12a aufgenommen. Grundsätzlich kann die Verbindung zwischen der Führungseinrichtung und der Beleuchtungseinrichtung form- und/oder kraftschlüssig sein. In der gezeigten Ausführung weist das Profil 12a eine lang gestreckte Aussparung 33 mit elastischen Randabschnitten 34 auf, welche das Lichtleiterkabel 14a teilweise umgreifen und in seiner vorbestimmten Lage halten. Gegenüber der vorstehend beschriebenen Ausführungsform der Fig. 2 ergibt sich der Vorteil, dass der Leuchtkörper besonders einfach und schnell ausgetauscht werden kann, ohne dass ein gleichzeitiger Austausch der Führungseinrichtung notwendig ist. Fig. 3a zeigt Führungseinrichtung 12a, Beleuchtungsvorrichtung 14 und Verstärkungsrahmen 20 in getrenntem Zustand, die Darstellung der Fig. 3b die Beleuchtungsvorrichtung 10 nach der erfolgten Montage. Für die weiteren Einzelheiten wird auf die Beschreibung der Fig. 2a und 2b verwiesen.

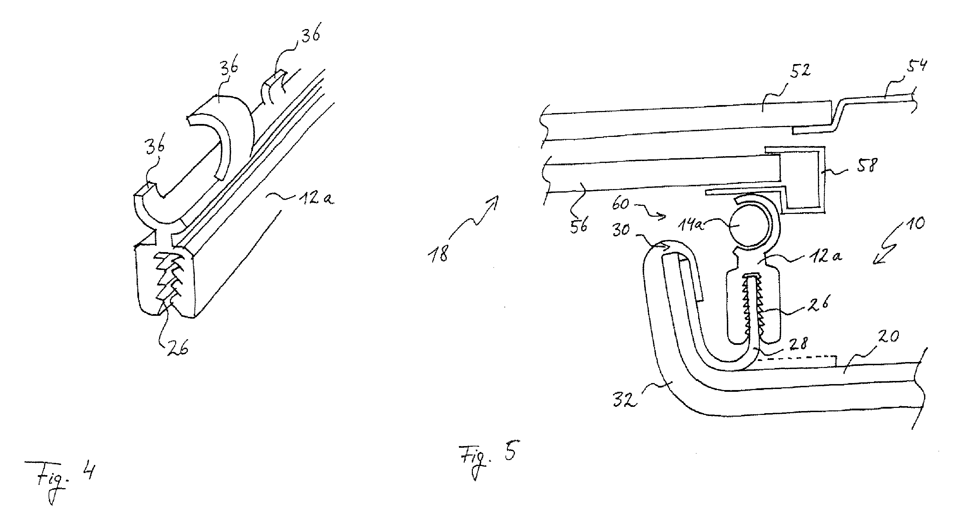

Fig. 4 zeigt eine alternative Ausführungsform der vorstehend mit Bezug auf Fig. 3a und 3b beschriebenen Führungseinrichtung 12a, 12b zur lösbaren Aufnahme der Leuchtkörper 14a, 14b. Anstelle eines halboffenen langgestreckten Aufnahmeraumes mit elastischen Randabschnitten weist die in Fig. 4 gezeigte Führungseinrichtung einzelne diskrete Klemmelemente 36 auf, zwischen denen das Lichtleiterkabel 14a, 14b eingeklemmt wird. Auch diese Ausführungsform ermöglicht eine stabile und dennoch leicht lösbare Fixierung der Leuchtkörper entlang des Randes der Öffnung 18.

Fig. 5 zeigt im Querschnitt eine Beleuchtungsvorrichtung 10 mit den Merkmalen der vorstehend beschriebenen Ausführungsformen in Zusammenschau mit einen Glasdach 52 und einer Sonnenschutzabdeckung 56. Zum Aufbau der Beleuchtungsvorrichtung 10 wird auf die Beschreibung der Figuren 3a, 3b und 4 verwiesen. Wie aus der Darstellung der Fig. 5 hervorgeht, ist die erfindungsgemäße Beleuchtungseinrichtung 10 unterhalb der durch das Glasdach 52 und die Sonnenschutzabdeckung 56 verschließbaren Dachöffnung 18 angeordnet. In der gezeigten Ausführungsform sind sowohl das Glasdach 52 als auch die Sonnenschutzabdeckung 56 in einer Längsrichtung des Leuchtkörpers 14a oder quer zu dieser Richtung verschiebbar und in entsprechenden Führungselementen 54 bzw. 58 gehalten. Da die Beleuchtungsvorrichtung 10 mit dem Verstärkungsrahmen 20 und nicht mit dem Deckel der Dachöffnung 18 verbunden ist, braucht sie nicht zusammen mit dem Glasdach 52 und/oder der Sonnenschutzabdeckung 56 bewegt zu werden. Dies ermöglicht einen vereinfachten (auch nachträglichen) Einbau der erfindungsgemäßen Innenraumbeleuchtung und erleichtert ihre Wartung.

Wie aus der Darstellung der Fig. 5 weiter zu entnehmen ist, wird die Beleuchtungsvorrichtung 10 durch den Profilkragen 30 des Verstärkungsrahmens 20 weitgehend gegen den Fahrzeuginnenraum abgeschirmt, so dass die Fahrzeuginsassen durch das von dem Leuchtkörper 14a ausgesandten Licht nicht geblendet werden. Der Leuchtkörper 14a ist so ausgerichtet, dass das Licht durch einen schmalen Austrittsspalt 60 zwischen dem Scheitel des Profilkragens 30 und der Unterseite der Sonnenschutzabdeckung 56 im Wesentlichen parallel zu der Unterseite der Sonnenschutzabdeckung 56 bzw. der Unterseite des Glasdaches 52 austritt. Das von dem Leuchtkörper 14a ausgesandten Licht wird dabei zumindest teilweise an der Unterseite der Sonnenschutzabdeckung 56 oder, sofern die Sonnenschutzabdeckung 56 geöffnet ist, an der Unterseite des Glasdachs 52 in Richtung auf den Fahrzeuginnenraum reflektiert. Dadurch wird eine indirekte, gleichmäßige und blendfreie Ausleuchtung des Fahrzeuginnenraums erreicht.

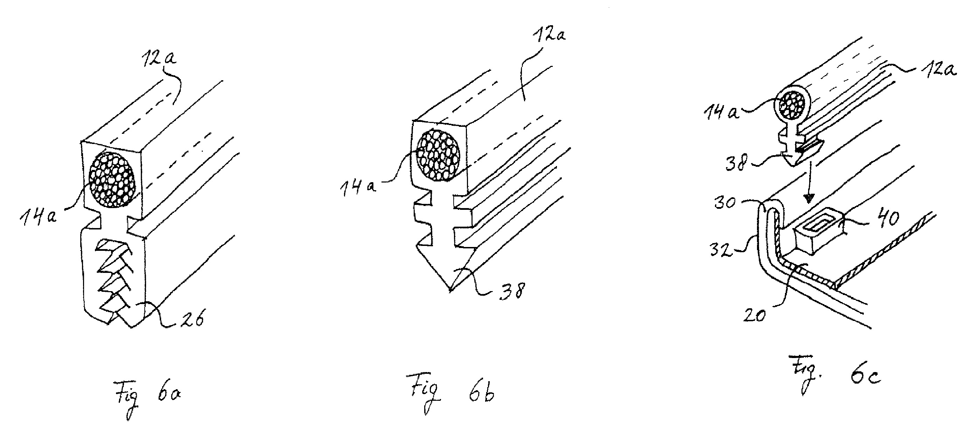

Fig. 6a, 6b und 6c zeigen alternative Möglichkeiten, die Führungseinrichtung 12a, 12b und den Verstärkungsrahmen 20 zu verbinden. Das anhand der vorstehenden Ausführungsformen bereits detailliert beschriebene Befestigungselement 26 mit einer mit Sperrhaken besetzten Aussparung, welche auf ein korrespondierendes Flanschstück des Verstärkungsrahmens 20 aufgesteckt wird, ist in Fig. 6a nochmals schematisch skizziert. Fig. 6b zeigt ein alternatives Profilsegment 12a, welches integral an seiner Unterseite spitz zulaufende Rastmittel 38 aufweist, die dazu eingerichtet sind, in eine auf der Oberseite des Verstärkungsrahmens 20 entlang des Profilkragens 30 ausgebildete Nut zu greifen. Fig. 6c zeigt ein ähnlich ausgebildetes extrudiertes Profil 12a mit an seiner Unterseite integral ausgebildeten Rastmitteln 38. Im Unterschied zur vorstehend mit Bezug auf Fig. 6b beschriebene Ausführungsform sind die Rastmittel 38 jedoch nicht entlang der gesamten Unterseite des extrudierten Profils 12a ausgebildet, sondern nur abschnittsweise oder an einzelnen vorbestimmten Positionen. An der Oberseite des Verstärkungsrahmens 20 sind an korrespondierenden Positionen entsprechende Sperrmittel 40 ausgeformt.

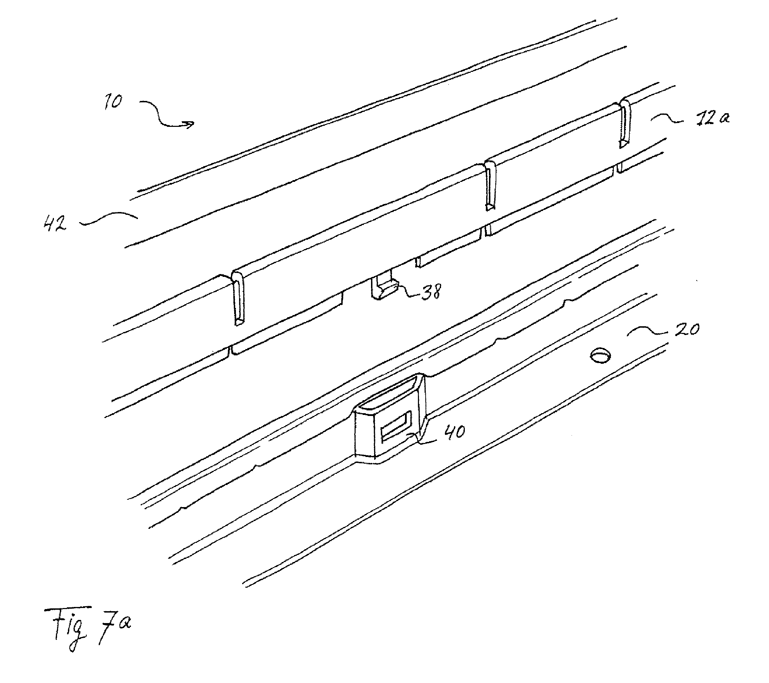

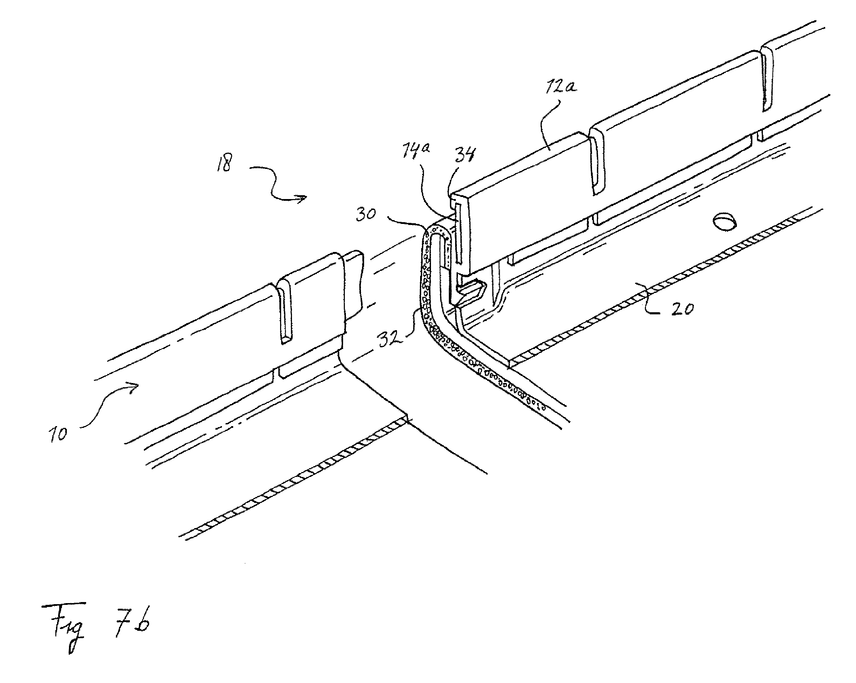

Fig. 7a und 7b zeigen eine Beleuchtungsvorrichtung 10 nach einer weiteren Ausführungsform der vorliegenden Erfindung. Ebenso wie die vorstehend mit Bezug auf Fig. 6c beschriebene Ausführungsform umfasst das extrudierte Profil 12a an seiner Unterseite integral ausgebildete Rastmittel 38, welche dazu ausgebildet sind, entlang der Öffnung auf der Oberseite des Verstärkungsrahmens 20 angeordnete Sperrmittel 40 zu hintergreifen, um die Beleuchtungseinrichtung 10 lösbar mit dem Verstärkungsrahmen 20 zu verbinden. Jedoch kann die in Fig. 7a, 7b gezeigte Beleuchtungseinrichtung alternativ oder zusätzlich auch eines der in den Fig. 6a und 6b gezeigten Befestigungselemente aufweisen.

Fig. 7a zeigt die Beleuchtungsvorrichtung 10 zerlegt in Führungseinrichtung und Beleuchtungseinrichtung, Fig. 7b nach der Verbindung mit dem Verstärkungsrahmen 20. Wiederum schirmt der Profilkragen 30 den Lichtkörper 14a gegen den Fahrzeuginnenraum ab und sorgt für eine indirekte, dezente Beleuchtung entlang des Randes der Dachöffnung 18.

Von den vorstehend beschriebenen Ausführungsformen unterscheidet sich die in Fig. 7a und 7b gezeigte Beleuchtungsvorrichtung 10 vornehmlich durch den Leuchtkörper, ein schmales elektrolumineszentes Band 42, welches mit dem extrudierten Profil 12a mechanisch oder druckhaftend verbunden ist. Ein elektrolumineszentes Lichtband ist aufgrund seiner geringen Tiefe für eine Verwendung zur Innenraumbeleuchtung entlang einer Fahrzeugdachöffnung hervorragend geeignet und darüber hinaus sehr biegsam, so dass es auch um enge Kanten und Ecken der Dachöffnung 18 geführt werden kann. Auch mehrfarbige elektrolumineszente Lichtbänder sind kommerziell verfügbar.

Das Profilelement 12a weist eine Aussparung 46 für das elektrolumineszente Lichtband und elastische Randabschnitte 34 auf, welche das Lichtband umgreifen und in der vorbestimmten Position halten. Aufgrund der Elastizität der Randabschnitte 34 lässt sich das Lichtband einfach und schnell montieren und auch sehr leicht von dem Führungselement 12a, 12b lösen, wenn es instandgesetzt oder ausgetauscht werden soll.

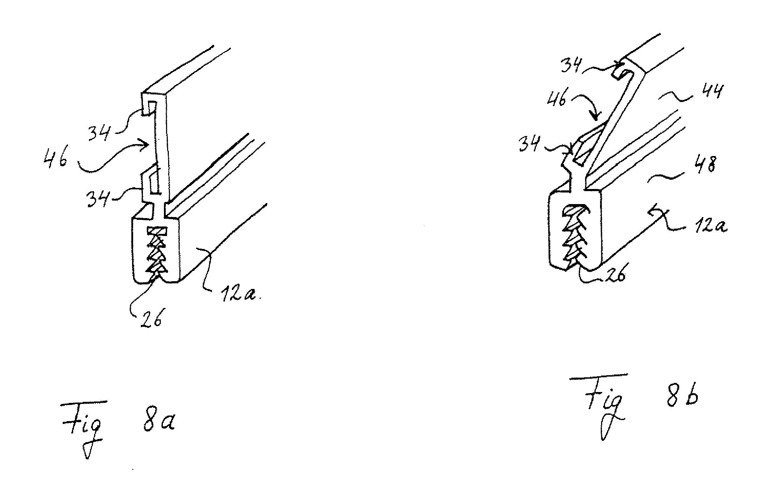

Bei der in Fig. 7b gezeigten Ausführungsform und einer in Fig. 8a dargestellten Variante, welche sich lediglich in den Befestigungselementen 26 unterscheidet, ist das extrudierte Profil 12a, 12b entlang des Randes der Öffnung 18 so ausgerichtet, dass das von der Beleuchtungseinrichtung 14a, 14b ausgesandte Licht im wesentlichen parallel zu der Abdeckung und/oder der Scheibe, die in die Öffnung eingesetzt ist, ausgesandt wird, d.h. im wesentlichen normal zu der der Öffnung 18 zugewandten Seitenfläche des Profilkragens 30. Das von der Beleuchtungseinrichtung ausgesandte Licht wird dann an der Abdeckung und/oder Scheibe der Öffnung in den Fahrgastraum gestreut. Im Sinne der Erfindung gilt Licht als im wesentlichen parallel zu einer Abdeckung und/oder einer Scheibe der Öffnung, wenn das von der Beleuchtungsvorrichtung ausgesandte Licht unter einem Winkel von nicht mehr als 30°, vorzugsweise nicht mehr als 20°, auf die Abdeckung bzw. die Scheibe auffällt.

Eine alternative Ausführungsform einer erfindungsgemäßen Beleuchtungsvorrichtung, bei welcher das ausgesandte Licht unter einem steileren Winkel auf die Abdeckung und/oder die Scheibe der Öffnung trifft, ist in Fig. 8b gegenübergestellt. Das extrudierte Profil 12a der Fig. 8b entspricht weitgehend dem der vorstehend mit Bezug auf Fig. 7b und Fig. 8a beschriebenen Ausführungsformen. Jedoch ist der obere Abschnitt 44 des extrudierten Profils der Fig. 8b, welcher den Leuchtkörper 42 trägt, gegen den unteren Abschnitt 48 des extrudierten Profils 12a, welcher die Verbindungselemente 26 trägt, um einen Winkel geneigt. Der Neigungswinkel beträgt vorzugsweise 20° bis 40°, besonders vorzugsweise 25° bis 35°. Aufgrund der vergrößerten Neigung trifft das von dem Leuchtkörper ausgesandte Licht unter einem größeren, d.h. steileren Winkel auf die Abdeckung bzw. Scheibe der Öffnung, so dass der in den Fahrzeugraum reflektierte Lichtanteil vergrößert ist.

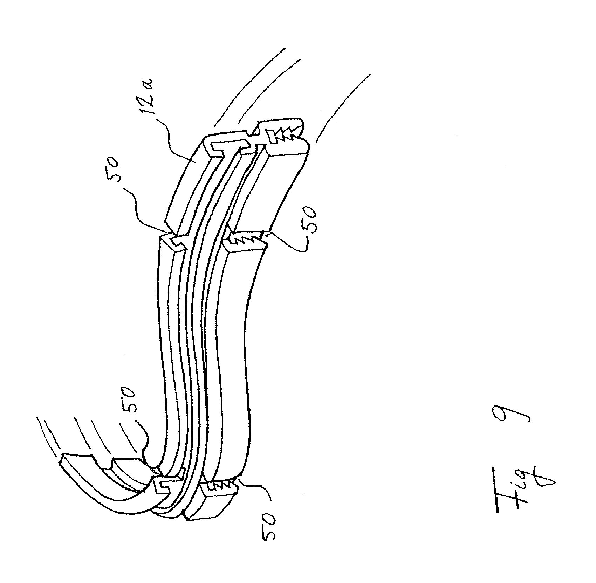

Anstelle oder ergänzend zu den vorstehend beschriebenen Leuchtkörpern eignen sich für die erfindungsgemäße Innenraumbeleuchtung eine Vielzahl weiterer Lichttechnologien. Beispielsweise kann als Leuchtkörper anstelle eines elektrolumineszenten Bandes auch ein mit lichtemittierenden Dioden versehenes Band oder ein UV-aufgeladenes Polymerband Verwendung finden. Ein besonderer Vorteil der beschriebenen Leuchtkörper sowie des Extrusionsprofils liegt in der weitgehenden Biegsamkeit, welche eine Anpassung der Beleuchtungsvorrichtung 10 an das Randprofil der Öffnung 18 und auch bei begrenztem Bauraum eine schnelle Montage ermöglicht. Die Flexibilität und Biegsamkeit des extrudierten Profils 12a, 12b kann durch Ausnehmungen 50 des Profils, wie sie in der Zeichnung der Fig. 9 dargestellt sind, zusätzlich erhöht werden. Ausnehmungen 50, welche in regelmäßigen Abständen entlang der Oberseite des Profilsegments 12a ausgebildet sind und mit entsprechenden Ausnehmungen 50 an der Unterseite des Profilsegments 12a korrespondieren, vereinfachen sowohl die Montage als auch den Austausch der erfindungsgemäßen Führungseinrichtung.

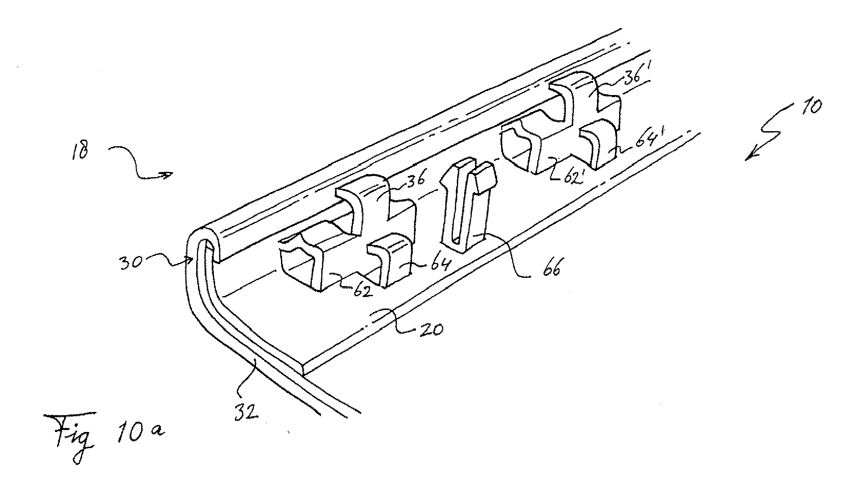

Fig. 10a zeigt eine alternative Ausgestaltung einer Beleuchtungsvorrichtung 10 entlang einer Dachöffnung 18. Sie unterscheidet sich von den vorstehend beschriebenen Ausführungsformen vornehmlich dadurch, dass Halteelemente 62, 62' zur Führung eines Leuchtkörpers entlang des Randes der Dachöffnung 18 einstückig mit dem Einfassungselement 20 ausgebildet sind. Eine einstückige Ausgestaltung vereinfacht die Herstellung der Beleuchtungsvorrichtung und senkt die mit der Herstellung verbundenen Kosten. Das Einfassungselement 20 und die Halteelemente 62, 62' können beispielsweise aus Kunststoff ausgebildet sein. Kunststoff gewinnt als Ausgangsmaterial für die Herstellung von Verstärkungsrahmen für Fahrzeugdachöffnungen zunehmende Bedeutung. Kunststoffbauteile lassen sich bei vergleichsweise geringem Produktionsaufwand in einer Vielzahl unterschiedlicher Formen und Gestaltungen herstellen, so dass Kunststoff zur einstückigen Ausbildung der Halteelemente 62, 62' mit dem Einfassungselement 20 besonders geeignet ist.

Fig. 10a zeigt eine Beleuchtungsvorrichtung 10 mit mehreren diskreten, entlang des Randes der Dachöffnung 18 angeordneten Halteelementen 62, 62', die Klemmelemente 36, 36' zum Halten des Leuchtkörpers vorsehen, wie sie vorstehend mit Bezug auf Fig. 4 und 5 beschrieben wurden. Die Erfindung ist jedoch nicht auf Einfassungselemente 20 mit solchen Halteelementen 62, 62' beschränkt. Vielmehr kann die Beleuchtungsvorrichtung 10 eines oder mehrere einstückig mit dem Einfassungelement ausgebildete Halteelemente umfassen, welche ähnlich oder gleich dem extrudierten Profil 12a, 12b in den vorstehend beschriebenen Ausführungsformen ausgestaltet sind. Beispielsweise kann die Beleuchtungsvorrichtung ein einzelnes, zusammenhängendes Halteelement umfassen, welches entlang des gesamten Randes der Dachöffnung 18 verläuft und eine langgestreckte Aussparung 33 mit elastischen Randabschnitten 34 aufweist, welche ein Lichtleiterkabel 14a teilweise umgreifen und in seiner vorbestimmten Lage halten können, wie vorstehend mit Bezug auf die Figuren 3a und 3b beschrieben.

Ebenso können die Halteelemente 62, 62' das Lichtleiterkabel 14a teilweise oder vollständig umschließen, wie mit Bezug auf die Ausführungsformen der Figuren 2a und 2b beschrieben.

Auch die in Fig. 10a gezeigte Beleuchtungsvorrichtung 10 weist an ihrer der Dachöffnung 18 zugewandten Seite einen Profilkragen 30 auf, auf den der Dachhimmel 32 gespannt ist. Der Profilkragen 30 ist einstückig mit dem Einfassungselement 20 ausgebildet und schirmt die Halteelemente 62, 62' und den an den Halteelementen 62, 62' geführten Leuchtkörper vom Fahrzeuginnenraum ab. Ferner umfasst die Beleuchtungsvorrichtung 10 Kabelhalterungen 64, 64' zur Führung und Arretierung einer elektrischen Leitung entlang des Randes der Dachöffnung 18 sowie ein Verbindungselement 66 zur Verbindung des Einfassungselementes 20 mit dem Fahrzeugdach.

Die Kabelhalterungen 64, 64' sowie das Verbindungselement 66 können gleichfalls einstückig mit dem Einfassungselement 20 verbunden sein. Dadurch ergeben sich die vorstehend mit Bezug auf die Halteelemente 62, 62' beschriebenen Vorteile bei der Herstellung.

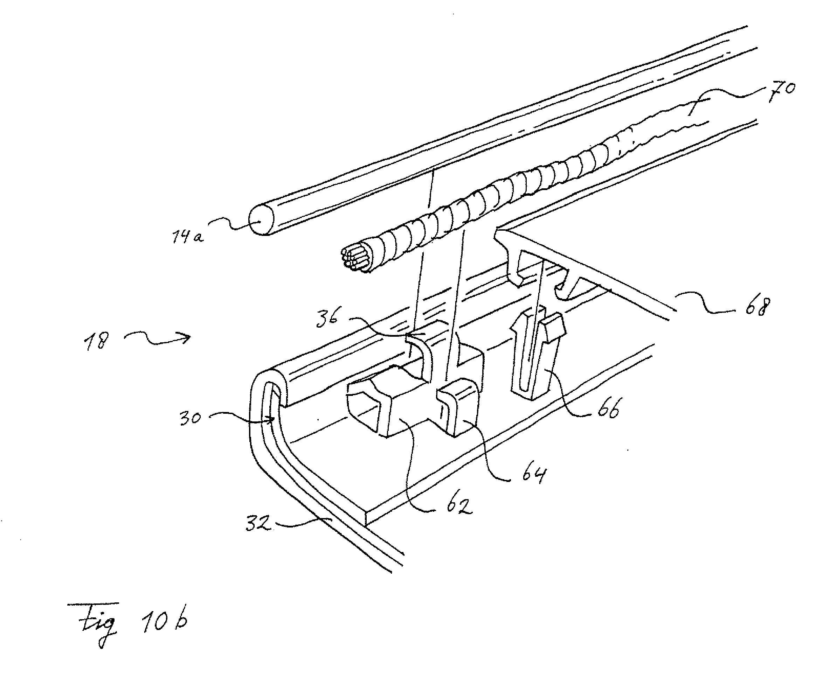

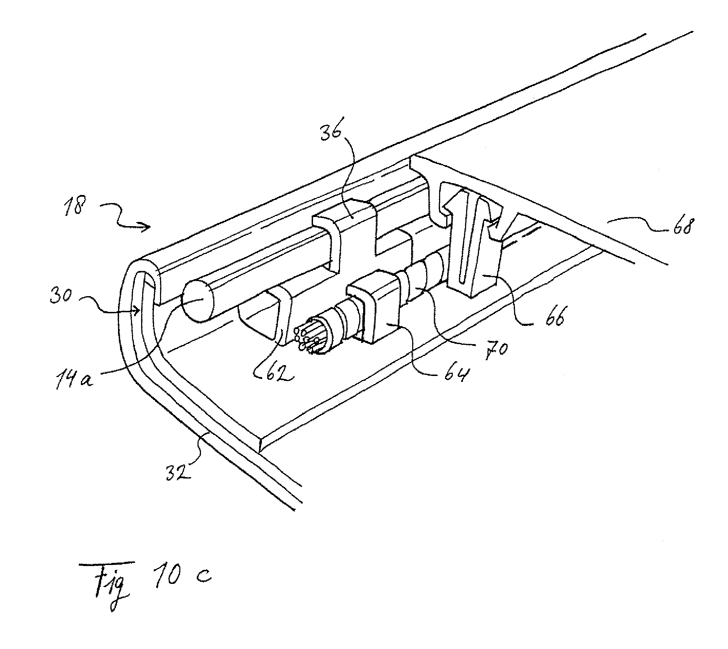

Fig. 10b zeigt die Beleuchtungsvorrichtung der Fig. 10a zusammen mit einem Lichtleiterkabel 14a, einem Leitungskabel 70 sowie einem Dachelement 68 vor der Verbindung, Fig. 10c nach der Verbindung. Das Lichtleiterkabel 14a wird unter Verwendung der Klemmelemente 36, 36' an der Oberseite der Halteelemente 62, 62' eingeklemmt. Das Leitungskabel 70, welches sowohl zur elektrischen Versorgung der erfindungsgemäßen Beleuchtungsvorrichtung als auch zur Versorgung weiterer elektrischer Komponenten des Fahrzeuginnenraums dienen kann, wird auf ähnliche Weise in die Kabelhalterungen 64, 64' eingeklemmt.

Die Darstellungen der Figuren 10a, 10b und 10c zeigen ein Einfassungselement, bei dem auf der von der Dachöffnung 18 abgewandten Rückseite der Halteelemente 62, 62' je eine Kabelhalterung 64, 64' ausgebildet ist. Dies bietet den Vorteil einer besonders einfachen Befestigung, bei der das Leitungskabel 70 zwischen einem Klemmelement der Kabelhalterung 64, 64' und einer rückseitigen Wand der Halteelemente 62, 62' lösbar fixiert wird. In anderen Ausführungsformen können die Kabelhalterungen 64, 64' entlang des Einfassungselementes 20 jedoch auch unabhängig von den Halteelementen 62, 62' und an anderen räumlichen Positionen ausgebildet sein.

Das Verbindungselement 66 weist an seiner Oberfläche Rastmittel auf, welche dazu eingerichtet sind, zugehörige Sperrmittel auf der Unterseite eines Dachelementes 68 zu hintergreifen. Dadurch wird eine stabile und dennoch leicht und schnell lösbare Fixierung des erfindungsgemäßen Einfassungselementes 20 an dem Dachelement 68 ermöglicht, welches das Einfassungselement 20 und den mit ihm verbundenen Leuchtkörper 14a wirksam gegen Erschütterungen und Vibration schützt.

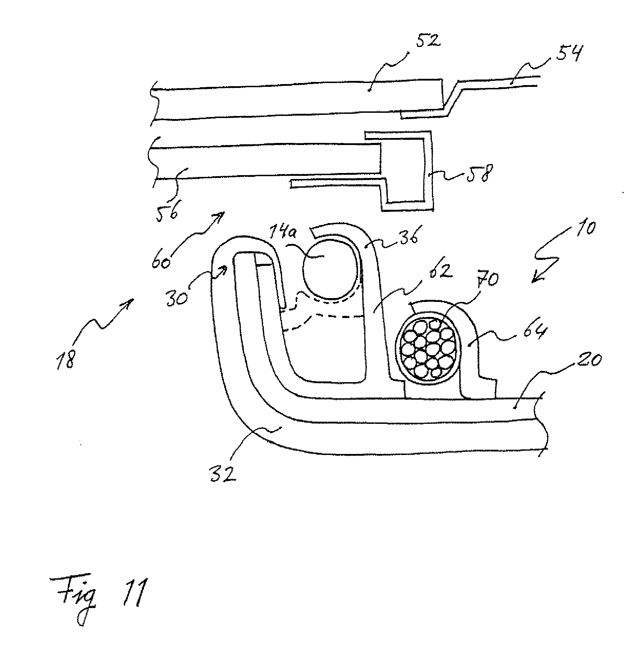

Fig. 11 zeigt eine Querschnittsabbildung einer erfindungsgemäßen Beleuchtungsvorrichtung 10, welche im Wesentlichen der vorstehend mit Bezug auf die Figuren 10a, 10b und 10c beschriebenen Ausführungsformen gleicht. Jedoch verzichtet die Ausführungsform der Fig. 11 auf die Verbindungselemente 66 zur Verbindung mit dem Dachelement 68. Die Anordnung und Funktionsweise des in der Darstellung der Fig. 11 gezeigten Glasdaches 52 sowie der Sonnenschutzabdeckung 56 wurden vorstehend mit Bezug auf die Abbildung der Fig. 5 beschrieben, auf die hier zur Vermeidung von Wiederholungen Bezug genommen wird. Das von dem Lichtleiterkabel 14a ausgesandte Licht trifft schräg aufwärts durch den Austrittsspalt 60 gegen die Unterseite der Sonnenschutzabdeckung 56 bzw. des Glasdaches 52 und wird von dort in den Fahrzeuginnenraum reflektiert.

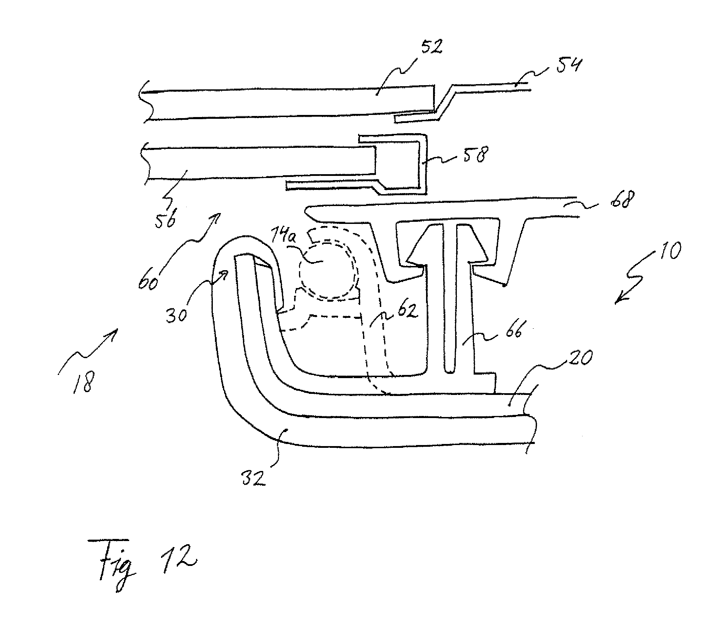

Die in Fig. 12 im Querschnitt gezeigte Ausführungsform der erfindungsgemäßen Beleuchtungsvorrichtung 10 unterscheidet sich von der Ausführungsform der Fig. 11 lediglich dadurch, dass sie auf die Kabelhalterungen 64, 64' zur Führung eines Leitungskabels 70 verzichtet und stattdessen ein Verbindungselement 66 zur Verbindung des Einfassungselementes 20 mit einem Dachelement 68 vorsieht.

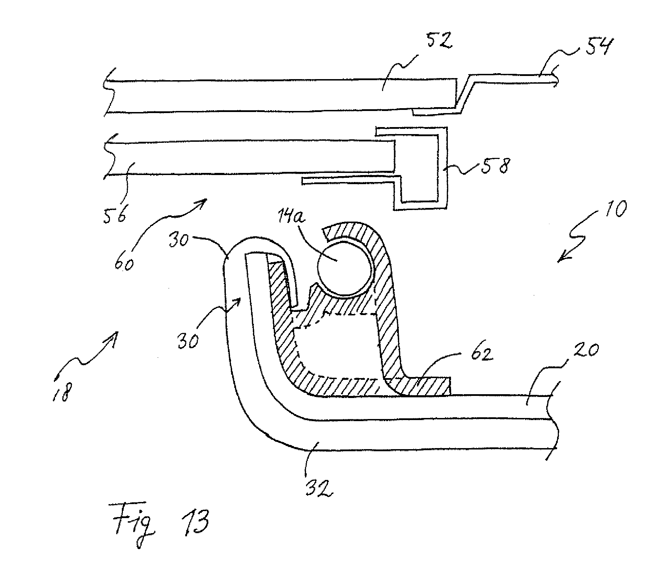

Die in Fig. 13 im Querschnitt gezeigte Ausführungsform der erfindungsgemäßen Beleuchtungsvorrichtung 10 verzichtet sowohl auf die Kabelhalterungen 64, 64' als auch auf das Verbindungselement 66. Diese Ausführungsform ist sehr vorteilhaft, wenn der zur Verfügung stehende Bauraum knapp ist.

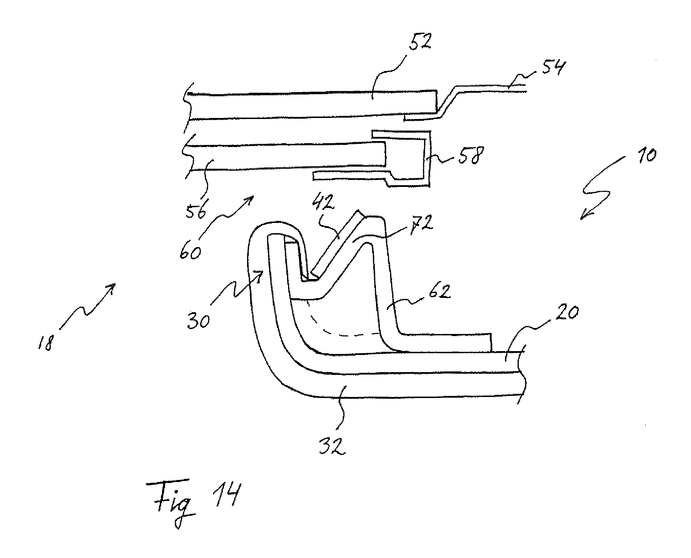

Fig. 14 zeigt im Querschnitt eine weitere Ausführungsform einer erfindungsgemäßen Beleuchtungsvorrichtung 10 mit einem einstückig mit dem Einfassungselement 20 ausgebildeten Halteelement 62 und entspricht insoweit weitgehend den vorstehend mit Bezug auf die Figuren 10 bis 13 beschriebenen Ausführungsformen. Anders als die vorgenannten Ausführungsformen ist die Beleuchtungsvorrichtung 10 der Fig. 14 jedoch nicht zur Aufnahme eines Lichtleiterkabels 14a mit kreisförmigen Querschnitt, sondern zur Aufnahme eines elektrolumineszenten Bandes 42 eingerichtet. Die Charakteristika und Vorteile eines solchen elektrolumineszenten Bandes wurden mit Bezug auf die Ausführungsformen der Figuren 7 bis 9 eingehend erläutert.

Zur Aufnahme des elektrolumineszenten Bandes 42 ist die Oberseite 72 des Halteelements 62 als in Richtung auf den Profilkragen 30 hin abfallende, ebene Fläche ausgebildet. Das elektrolumineszente Band 42 ist mit der geneigten Oberseite 72 mechanisch, klebend oder druckhaftend verbunden. Das von dem elektrolumineszenten Band 42 ausgesandte Licht tritt durch den Austrittsspalt 60 zwischen dem Scheitel des Profilkragens 30 und der Unterseite der Sonnenschutzabdeckung 56 bzw. des Glasdaches 52 aus, trifft unter einem Winkel gegen die Unterseite der Sonnenschutzabdeckung 56 oder des Glasdaches 52 auf und wird von dort in den Fahrzeuginnenraum reflektiert. Der Neigungswinkel der Oberseite 72 des Halteelements 62 gegen die durch die Unterseite des Glasdaches 52 bzw. der Sonnenschutzabdeckung 56 definierte Ebene beträgt vorzugsweise 25° bis 60°, besonders vorzugsweise 30° bis 50°. Aufgrund der Neigung der Oberseite 72 trifft das von dem Leuchtkörper ausgesandte Licht im Vergleich mit den Ausführungsformen der Figuren 10 bis 13 unter einem größeren, d.h. steileren Winkel auf die Unterseite der Sonnenschutzabdeckung 56 bzw. die Unterseite des Glasdaches 52, so dass der in den Fahrzeuginnenraum reflektierte Lichtanteil vergrößert ist.

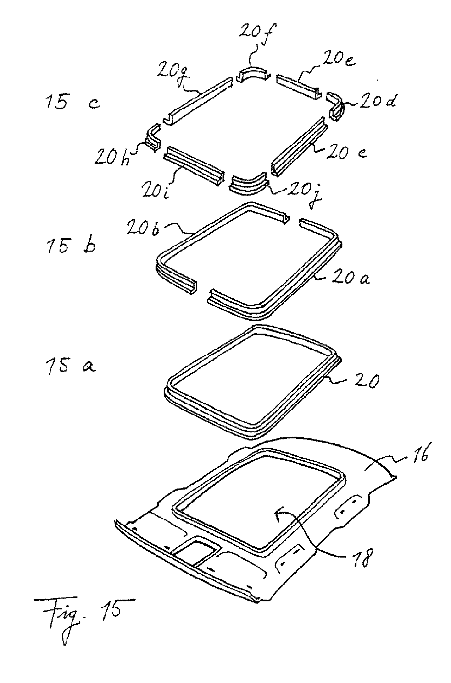

Fig. 15 zeigt in drei Teilabbildungen 15a, 15b, 15c drei alternative Ausführungsformen eines Einfassungselementes 20 für eine Öffnung 18 in einer Dachinnenverkleidung 16. In der Darstellung 15a der Fig. 15 ist das Einfassungselement 20 einstückig ausgebildet und umgibt den Rand der Dachöffnung 18 vollständig. Die Darstellung 15b der Fig. 15 zeigt ein Einfassungselement 20 mit zwei Einfassungssegmenten 20a, 20b, welche in verbundenem Zustand die Dachöffnung 18 gemeinsam vollständig umgeben. Die Einfassungssegmente 20a und 20b können sowohl durch eine Steckverbindung als auch durch eine Klebeverbindung oder Schweißverbindung miteinander verbunden werden.

Das erfindungsgemäße Einfassungselement 20 kann auch mehr als zwei Einfassungssegmente umfassen. Beispielsweise besteht das in der Darstellung 15c der Fig. 15 gezeigte Einfassungselement 20 aus acht miteinander verbundenen Einfassungssegmenten 20c bis 20j, welche im verbundenen Zustand den Rand der Dachöffnung 18 gemeinsam vollständig umschließen. Je eines der Einfassungssegmente 20c, 20e, 20g, 20i ist entlang der Längsseiten bzw. der Querseiten der Dachöffnung 18 ausgebildet, während die verbleibenden vier Einfassungssegmente 20d, 20f, 20h, 20j eine Krümmung aufweisen und entlang der Ecken der Dachöffnung 18 ausgebildet sind.

Die vorstehend beschriebenen Ausführungsformen veranschaulichen die erfindungsgemäße Beleuchtungsvorrichtung beispielhaft anhand spezifischer Führungseinrichtungen und Beleuchtungseinrichtungen. Dem Fachmann werden jedoch weitere Ausführungsformen der Führungseinrichtungen und der Beleuchtungseinrichtungen offensichtlich sein. Der Fachmann wird auch erkennen, dass alle Führungseinrichtungen, Beleuchtungseinrichtungen, Leuchtkörper und Verbindungselemente zwischen Führungseinrichtung und Beleuchtungseinrichtung einerseits und Führungseinrichtung und Einfassungselement keinesfalls auf die beschriebenen Ausführungsbeispiele beschränkt sind und in beliebigen Kombinationen Verwendung finden können.

Die erfindungsgemäße Beleuchtungsvorrichtung wurde vorstehend am Beispiel einer Innenraumbeleuchtung entlang einer Fahrzeugdachöffnung, beispielsweise einer Schiebedachöffnung, beschrieben. Dem Fachmann wird jedoch offensichtlich sein, dass die erfindungsgemäße Lehre nicht auf solche Fahrzeugdachöffnungen beschränkt ist, sondern in gleicher Weise auf eine Vielzahl anderer Öffnungen zwischen einem Fahrzeuginnenraum und einem Fahrzeugaußenraum anwendbar ist.

### Bezugszeichen

- 10: Beleuchtungsvorrichtung
- 12a, 12b: extrudiertes Profil
- 14a, 14b: Leuchtkörper
- 16: Dachinnenverkleidung
- 18: Dachöffnung
- 20: Verstärkungsrahmen, Einfassungselement
- 20a-20j: Einfassungssegmente des Einfassungselements 20
- 22: Befestigungselemente
- 24: Kabelführung
- 26: Verbindungselemente
- 28: Flanschstücke
- 30: Profilkragen des Verstärkungsrahmens 20
- 32: Dachhimmel
- 33: Aussparung
- 34: elastische Randabschnitte
- 36, 36': Klemmelemente
- 38: Rastmittel
- 40: Sperrmittel
- 42: elektrolumineszentes Band
- 44: oberer Abschnitt des extrudierten Profils 12a
- 46: Aussparung
- 48: unterer Abschnitt des extrudierten Profils 12a
- 50: Ausnehmungen
- 52: Glasdach
- 54: Führung für Glasdach 52
- 56: Sonnenschutzabdeckung
- 58: Führung für Sonnenschutzabdeckung 56
- 60: Austrittsspalt
- 62, 62': Halteelemente
- 64, 64': Kabelhalterungen
- 66: Verbindungselement
- 68: Dachelement
- 70: Leitungskabel
- 72: Oberseite des Halteelements 62

## Patentansprüche

1. Beleuchtungsvorrichtung (10) für einen Fahrzeuginnenraum, welcher eine von einem Einfassungselement (20) umschlossene Öffnung (18) aufweist, mit:
einer langgestreckten Führungseinrichtung (12a, 12b), welche lösbar mit dem Einfassungselement (20) verbunden ist und sich entlang wenigstens eines Abschnitts des Randes der Öffnung (18) erstreckt; und
einer Beleuchtungseinrichtung (14a, 14b; 42), welche mittels der Führungseinrichtung (12a, 12b) mit dem Einfassungselement (20) verbunden ist und sich entlang des Randes der Öffnung (18) erstreckt.

2. Beleuchtungsvorrichtung (10) nach Anspruch 1, bei welcher die Führungseinrichtung (12a, 12b) auf das Einfassungselement (20) aufsteckbar oder aufschiebbar ist.

3. Beleuchtungsvorrichtung (10) nach einem der vorangehenden Ansprüche, bei welcher die Beleuchtungseinrichtung (14a, 14b; 42) formschlüssig mit der Führungseinrichtung (12a, 12b) verbunden ist.

4. Beleuchtungsvorrichtung (10) nach einem der vorangehenden Ansprüche, bei welcher die Beleuchtungseinrichtung (14a, 14b; 42) lösbar mit der Führungseinrichtung (12a,12b) verbunden ist.

5. Beleuchtungsvorrichtung (10) nach einem der vorangehenden Ansprüche, bei welcher die Führungseinrichtung (12a, 12b) und/oder die Beleuchtungseinrichtung (14a, 14b; 42) biegbar sind.

6. Beleuchtungsvorrichtung (10) nach einem der vorangehenden Ansprüche, bei welcher die Führungseinrichtung (12a, 12b) die Beleuchtungseinrichtung (14a, 14b; 42) um zumindest einen Eckabschnitt der Öffnung (18) führt.

7. Beleuchtungsvorrichtung (10) für einen Fahrzeuginnenraum mit:
einem Einfassungselement (20), welches eine Öffnung (18) des Fahrzeuginnenraums umschließt;
mindestens einem Halteelement (62, 62'), welches einstückig mit dem Einfassungselement (20) ausgebildet ist; und
einer Beleuchtungseinrichtung (14a, 14b; 42), welche mittels des mindestens einen Halteelementes (62, 62') mit dem Einfassungselement (20) verbunden ist und sich entlang wenigstens eines Abschnitts des Randes der Öffnung (18) erstreckt.

8. Beleuchtungsvorrichtung (10) nach einem der vorangehenden Ansprüche, bei welcher die Beleuchtungseinrichtung (14a, 14b; 42) einen bandförmigen Leuchtkörper (42) umfasst, der sich entlang der Öffnung (18) erstreckt.

9. Beleuchtungsvorrichtung (10) nach einem der vorangehenden Ansprüche, bei welcher die Beleuchtungseinrichtung (14a, 14b; 42) einen Lichtleiter und/oder ein elektrolumineszentes Lichtband und/oder ein mit lichtemittierenden Dioden versehenes Band umfasst.

10. Beleuchtungsvorrichtung (10) nach einem der vorangehenden Ansprüche, bei welcher die Beleuchtungseinrichtung (14a, 14b; 42) so ausgerichtet ist, dass das von der Beleuchtungseinrichtung (14a, 14b; 42) ausgesandte Licht zumindest teilweise von einer Abdeckung (56) und/oder einer Scheibe (52) der Öffnung (18) in den Fahrzeuginnenraum reflektiert wird.

11. Beleuchtungsvorrichtung (10) nach einem der vorangehenden Ansprüche, bei welcher die Beleuchtungseinrichtung (14a, 14b; 42) so ausgerichtet ist, dass das Licht von der Beleuchtungseinrichtung (14a, 14b; 42) im wesentlichen parallel zu einer Abdeckung (56) und/oder einer Scheibe (52) der Öffnung (18) ausgesandt wird.

12. Beleuchtungsvorrichtung (10) nach einem der vorangehenden Ansprüche, bei welcher die Beleuchtungseinrichtung (14a, 14b; 42) sich entlang wenigstens eines Zehntels, vorzugsweise wenigstens eines Viertels, der Umfangslänge der Öffnung (18) erstreckt und besonders vorzugsweise die Öffnung (18) vollständig umschließt.

13. Einfassungselement (20) für eine Öffnung (18) zwischen Fahrzeuginnenraum und Fahrzeugaußenraum mit einer Beleuchtungsvorrichtung (10) nach einem der vorangehenden Ansprüche.

14. Einfassungselement (20) nach Anspruch 13, bei welchem die Beleuchtungseinrichtung (14a, 14b, 42) unterhalb der durch den Rand der Öffnung (18) definierten Ebene angeordnet ist.

15. Fahrzeugdachöffnung mit einem Einfassungselement (20) nach Anspruch 13 oder 14 und/oder mit einer Beleuchtungsvorrichtung (10) nach einem der Ansprüche 1 bis 12.
